# EUROPÄISCHE PATENTSCHRIFT

(11) **EP 1 129 903 B1**
(45) Veröffentlichungstag und Bekanntmachung des Hinweises auf die Patenterteilung: **21.04.2010**
(21) Anmeldenummer: 01103618.3
(22) Anmeldetag: 22.02.2001
(51) Int. Cl.: B60Q 1/30

(54) **Bremsleuchte mit integrierter Scheibenwaschvorrichtung**
Braking light with integrated windschield washing device
Feu de freinage avec dispositif lave-glace intégré

(30) Priorität: 02.03.2000 DE 10010030
(43) Veröffentlichungstag der Anmeldung: 05.09.2001
(73) Patentinhaber: Volkswagen Aktiengesellschaft, 38436 Wolfsburg (DE)
(72) Erfinder: Sühring, Axel, 38448 Wolfsburg (DE); Weihrauch, Michael, 38554 Weyhausen (DE)

(56) Entgegenhaltungen:
- EP-A- 0 914 995
- DE-A1- 2 945 104
- FR-A- 2 674 804
- FR-A- 2 705 291
- FR-A- 2 726 238

## Beschreibung

Die vorliegende Erfindung betrifft ein Kraftfahrzeug mit einer Bremsleuchte, die oberhalb der Heckscheibe eines Fahrzeugs befestigt ist, nach dem Oberbergriff des Anspruchs 1.

Um die Sicherheit von Kraftfahrzeugen zu erhöhen, wird zusätzlich zu den zwei außen angeordneten Bremsleuchten eine dritte Bremsleuchte in einer erhöhten zentralen Position des Kraftfahrzeugs angebracht.

Ferner ist bei Kraftfahrzeugen mit einem Heckscheibenwischer normalerweise eine Heckscheibenwaschvorrichtung vorgesehen.

Aus ästhetischen Gründen sowie zur Senkung der Montagekosten und Vereinfachung der Montage ist vorgeschlagen worden, die Heckscheibenwaschvorrichtung und die erhöht angeordnete Bremsleuchte zu einem Teil zusammenzufassen. Beispielsweise wird in der japanischen Offenlegungsschrift JP 62152939 eine Bremsleuchte beschrieben, die zentral am oberen Ende der Heckklappe angeordnet ist und bei der zwischen zwei Bremsleuchten eine Düse eingesetzt ist, über die eine Spritzwasserlösung auf die Heckscheibe gespritzt werden kann. Die Düse wird über einen Zuführkanal mit der Spritzwasserlösung versorgt.

Ferner wird in der EP 0 626 296 B1 eine Warnleuchte für Kraftfahrzeuge beschrieben, die mit einer Waschvorrichtung für die Heckscheibe ausgerüstet ist. Die Waschvorrichtung weist eine Waschflüssigkeits-Sprühdüse auf, die in einer in der Leuchtscheibe eingebrachten Halterung angeordnet ist.

Die Kombination einer Signalleuchte mit einer Scheibenwaschvorrichtung ist außerdem aus der FR 2 746 732 B1, FR 2 746 731 B1, FR 2 745 246 B1, FR 2 726 238 B1, FR 2 726 237 B1 und der FR 2 705 292 B1 bekannt.

Bei den Bremsleuchten des Standes der Technik, bei denen eine Scheibenwaschvorrichtung integriert ist, ist es zwar nicht mehr erforderlich, die Bremsleuchte und die Waschvorrichtung getrennt voneinander am Heck des Kraftfahrzeugs anzuordnen, jedoch weisen die bisher beschriebenen Bremsleuchten den Nachteil auf, daß nach wie vor die Montage relativ aufwendig ist, da in der Bremsleuchte gesonderte Teile für die Scheibenwaschvorrichtung eingesetzt werden müssen.

Es ist die Aufgabe der vorliegenden Erfindung ein Kraftfahrzeug mit einer Bremsleuchte mit einer Scheibenwaschvorrichtung vorzuschlagen, deren Montage und Aufbau vereinfacht ist.

Diese Aufgabe wird erfindungsgemäß durch die Merkmale des Anspruchs 1 gelöst. Weitere Ausgestaltungen ergeben sich aus den Unteransprüchen.

Die Bremsleuchte weist ein Gehäuse, zumindest ein Leuchtmittel und eine Scheibenwaschvorrichtung, die einen in zumindest eine Spritzwasser-Austrittsöffnung mündenden Spritzwasserzuführkanal umfaßt, auf, wobei der Spritzwasserzuführkanal und die Spritzwasser-Austrittsöffnung von Gehäuseteilen gebildet sind. Die Bremsleuchte hat den Vorteil, daß alle Einrichtungen, die für die Scheibenwaschvorrichtung erforderlich sind, von Gehäuseteilen gebildet werden. Damit ist es bei der Bremsleuchte nicht erforderlich, gesonderte Teile für die Scheibenwaschvorrichtung in die Bremsleuchte einzusetzen. Insbesondere ist es nicht nötig, einen Zuführschlauch oder dgl. für das Spritzwasser oder eine gesonderte Düse vorzusehen.

Bei der Bremsleuchte wird eine in Lichtemissionsrichtung der Bremsleuchte weisende Wand des Gehäuses von einer Leuchtscheibe gebildet und die Spritzwasser-Austrittsöffnung wird von einer Öffnung in dieser Leuchtscheibe gebildet. Die Öffnung in der Leuchtscheibe kann ein Loch, ein Langloch oder ein Schlitz sein. Die Leuchtscheibe der Bremsleuchte weist üblicherweise in die zur Fahrtrichtung des Kraftfahrzeugs entgegengesetzte Richtung. Bei vielen Heckausführungen von Kraftfahrzeugen sollte auch das Spritzwasser für die Heckscheibe im wesentlichen entgegen der Fahrtrichtung des Kraftfahrzeugs austreten. Dadurch daß bei dieser Ausgestaltung der Bremsleuchte die Spritzwasser-Austrittsöffnung in der Leuchtscheibe vorgesehen ist, ist es nicht erforderlich einen gesonderten Abschnitt außerhalb des Bereichs der Leuchtscheibe für die Spritzwasser-Austrittsöffnung vorzusehen. Der gesamte entgegen der Fahrtrichtung weisende Abschnitt der Bremsleuchte kann somit von der Leuchtscheibe ausgefüllt werden.

In einer weiteren Ausgestaltung der Bremsleuchte können von den Gehäuseteilen mehrere Spritzwasser-Austrittsöffnungen gebildet sein, die mit dem Spritzwasserzuführkanal in Verbindung stehen. Das Bereitstellen von mehreren Spritzwasser-Austrittsöffnungen hat den Vorteil, daß die Heckscheibe besonders umfassend und gleichmäßig mit Spritzwasser bespritzt werden kann. Normalerweise würde das Vorsehen von mehreren Spritzwasser-Austrittsöffnungen einen sehr großen Aufwand erfordern. Bei der speziellen Ausgestaltung der erfindungsgemäßen Bremsleuchte muß von den Gehäuseteilen nur ein Kanalsystem gebildet werden das die Versorgung mit Spritzwasser und den Austritt bei mehreren Öffnungen erlaubt. Es werden hierdurch insbesondere keine zusätzlichen Kosten verursacht.

Der Spritzwasserzuführkanal kann vorteilhafterweise bei der Spritzwasser-Eintrittsöffnung mit einem Schnellkupplungsanschluß versehen sein, um die Bremsleuchte auf besonders einfache Weise an ein Spritzwasserreservoir anschließen zu können. Des weiteren ist das Gehäuse vorteilhafterweise aus zwei oder mehreren Spritzgußteilen zusammengesetzt.

Bei dem erfindungsgemäßen Kraftfahrzeug ist die Bremsleuchte oberhalb der Heckscheibe des Kraftfahrzeugs befestigt und über den Spritzwasserzuführkanal der Bremsleuchte ist durch die Spritzwasser-Austrittsöffnung hindurch Spritzwasser der Heckscheibe zuführbar.

Die vorliegende Erfindung wird nun anhand eines Ausführungsbeispiels mit Bezug zu den beigefügten Zeichnungen näher erläutert.

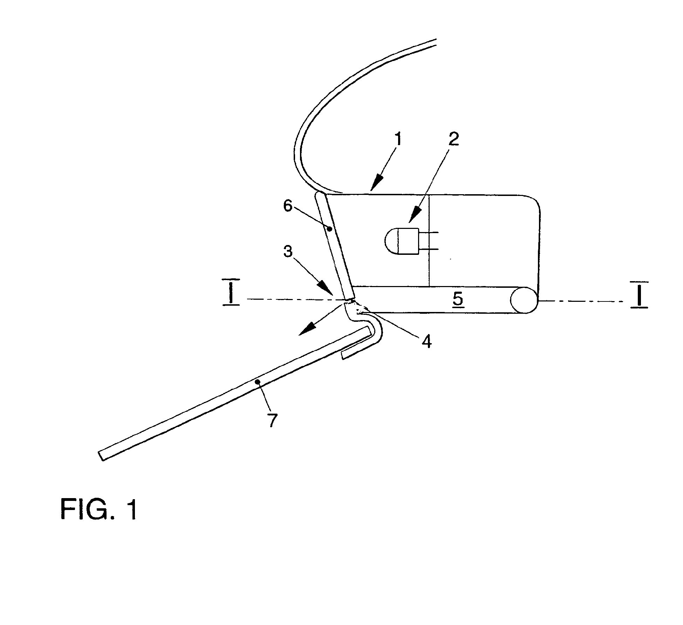

- Fig. 1: zeigt schematisch einen Querschnitt durch ein Ausführungsbeispiel der Bremsleuchte des erfindungsgemäßen Kraftfahrzeug und

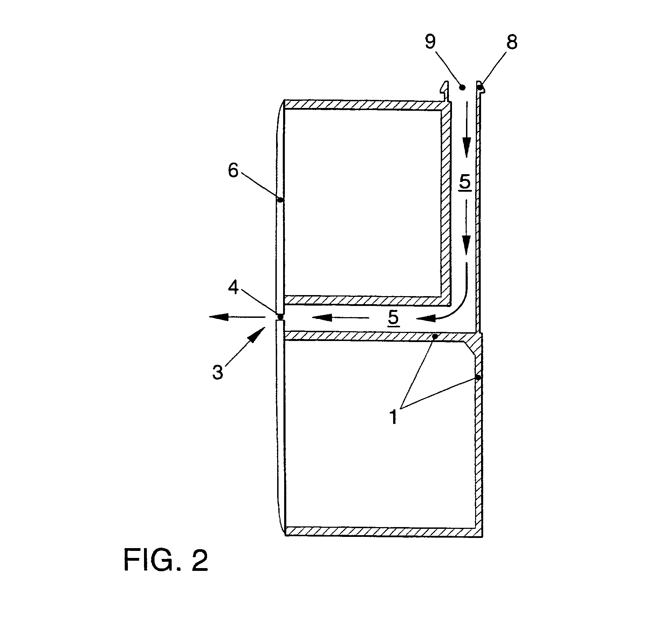

- Fig. 2: zeigt einen Längsschnitt entlang der Linie I-I der Fig. 1 der Bremsleuchte des erfindungsgemäßen Kraftfahrzeugs.

Die Bremsleuchte weist ein mit 1 bezeichnetes Gehäuse auf. Die im eingebauten Zustand der Bremsleuchte nach hinten gerichtete Wand des Gehäuses 1 wird von einer Leuchtscheibe 6 gebildet. Die Leuchtscheibe ist durchscheinend und vorzugsweise rot eingefärbt. Im Inneren des Gehäuses 1 ist ein oder sind mehrere Leuchtmittel 2 angeordnet. Die Leuchtmittel 2 sind auf übliche Weise mit dem Bremspedal des Kraftfahrzeugs verbunden, um die Betätigung der Bremse anzuzeigen.

Des weiteren umfaßt die Bremsleuchte eine Scheibenwaschvorrichtung 3, die eine Spritzwasser-Austrittsöffnung 4 und einen Spritzwasserzuführkanal 5 aufweist. Ferner weist die Scheibenwaschvorrichtung 3 eine Spritzwasser-Eintrittsöffnung 9 mit einem Schnellkupplungsanschluß 8 auf. Über den Schnellkupplungsanschluß 8 ist ein herkömmlicher Schlauch an die Bremsleuchte anschließbar, um eine Verbindung mit einem Spritzwasserreservoir herzustellen. Bei Betätigung der Scheibenwaschvorrichtung gelangt Spritzwasser von dem Spritzwasserreservoir über die Spritzwasser-Eintrittsöffnung 9 entlang der in den Figuren gezeigten Pfeilen in den Spritzwasserzuführkanal 5 und von dort durch die Spritzwasser-Austrittsöffnung 4 auf die Heckscheibe 7 des Kraftfahrzeugs.

Die gesamte in die Bremsleuchte integrierte Scheibenwaschvorrichtung 3 wird von Teilen des Gehäuses 1 gebildet. Das Gehäuse kann beispielsweise aus Kunststoff bestehen und im Spritzgußverfahren hergestellt worden sein. Dabei kann die Leuchtscheibe 6 einstückig mit den übrigen Gehäuseteilen 1 oder separat aus einem anderen Material gefertigt werden und anschließend auf das Gehäuse 1 aufgesetzt werden. Es ist demnach bei der Bremsleuchte nicht erforderlich für die Scheibenwaschvorrichtung 3 gesonderte Teile wie einen Zuführschlauch für das Spritzwasser oder eine Spritzwasserdüse vorzusehen.

In dem weiteren (nicht gezeigten) Ausführungsbeispiel werden von den Gehäuseteilen mehrere Spritzwasser-Austrittsöffnungen 4 gebildet die jeweils mit dem Spritzwasserzuführkanal 5 in Verbindung stehen. In diesem Fall verläuft der Spritzwasserzuführkanal 5 vorteilhafterweise über die gesamte Breite der Bremsleuchte, wobei sich jeweils zur Leuchtscheibe 6 hin Abzweigungen erstrecken. Am Ende dieser Abzweigungen weist die Leuchtscheibe 6 jeweils Öffnungen auf, die die Spritzwasser-Austrittsöffnungen 4 bilden.

## Patentansprüche

1. Kraftfahrzeug mit einer Bremsleuchte, die ein Gehäuse (1), ein oder mehrere Leuchtmittel (2) und eine Scheibenwaschvorrichtung (3) aufweist, die einen in zumindest eine Spritzwasser-Austrittsöffnung (4) mündenden Spritzwasserzuführkanal (5) umfasst, wobei die Bremsleuchte oberhalb der Heckscheibe (7) des Kraftfahrzeugs befestigt ist und wobei über den Spritzwasserzuführkanal (5) der Bremsleuchte durch die Spritzwasser-Austrittsöffnung(en) hindurch Spritzwasser einer Heckscheibe (7) des Kraftfahrzeugs zuführbar ist, wobei der Spritzwasserzuführkanal (5) von Gehäuseteilen der Bremsleuchte gebildet ist und wobei eine in Lichtemissionsrichtung der Bremsleuchte weisende Wand des Gehäuses (1) von einer Leuchtscheibe (6) gebildet ist,
**dadurch gekennzeichnet,**
**daß** die Spritzwasser-Austrittsöffnung (4) von einer Öffnung in der Leuchtscheibe (6) gebildet ist und
**daß** der Spritzwasserzuführkanal (5) im unteren, der Heckscheibe (7) benachbarten Bereich des Gehäuses (1) ausgebildet ist und oberhalb des Spritzwasserzuführkanals (5) im Gehäuse (1) das/die Leuchtmittel (2) angeordnet ist/sind.

2. Kraftfahrzeug gemäß Anspruch 1,
**dadurch gekennzeichnet,**
**dass** die Öffnung in der Leuchtscheibe (6) ein Loch, ein Langloch oder ein Schlitz ist.

3. Kraftfahrzeug gemäß Anspruch 1 oder 2,
**dadurch gekennzeichnet,**
**daß** von den Gehäuseteilen mehrere Spritzwasser-Austrittsöffnungen (4) gebildet sind, die mit dem Spritzwasserzuführkanal (5) in Verbindung stehen.

4. Kraftfahrzeug gemäß einem der vorstehenden Ansprüche,
**dadurch gekennzeichnet,**
**daß** der Spritzwasserzuführkanal (5) eine Spritzwasser-Eintrittsöffnung (9) mit einem Schnellkupplungsanschluß (8) aufweist.

5. Kraftfahrzeug gemäß einem der vorstehenden Ansprüche,
**dadurch gekennzeichnet,**
**daß** das Gehäuse (1) aus Spritzgußteilen zusammengesetzt ist.

## Claims

1. Motor vehicle having a brake light which has a housing (1), one or more lighting means (2) and a windshield washing device (3) which comprises a spray water feed duct (5) which opens into at least one spray water outlet opening (4), wherein the brake light is mounted above a rear windshield (7) of the motor vehicle, and wherein spray water can be fed to the rear windshield (7) of the motor vehicle via the spray water feed duct (5) of the brake light and through the spray water outlet opening or openings, wherein the spray water feed duct (5) is formed by housing components of the brake light and wherein a wall of the housing (1), which points in the direction of light emission from the brake light is formed by a lens (6),
**characterized**
**in that** the spray water outlet opening (4) is formed by an opening in the lens (6), and
**in that** the spray water feed duct (5) is formed in the lower region of the housing (1) which is adjacent to the rear windshield (7), and the lighting means (2) is/are arranged above the spray water feed duct (5) in the housing (1).

2. Motor vehicle according to Claim 1,
**characterized**
**in that** the opening in the lens (6) is a hole, an elongate hole or a slit.

3. Motor vehicle according to Claim 1 or 2,
**characterized**
**in that** a plurality of spray water outlet openings (4), which are connected to the spray water feed duct (5), are formed by the housing components.

4. Motor vehicle according to one of the preceding claims,
**characterized**
**in that** the spray water feed duct (5) has a spray water inlet opening (9) with a quick-release coupling connection (8).

5. Motor vehicle according to one of the preceding claims,
**characterized**
**in that** the housing (1) is composed of injection moulded components.

## Revendications

1. Véhicule automobile comprenant un feu de freinage qui présente un boîtier (1), un ou plusieurs moyens d'éclairage (2) et un dispositif lave-glace (3), qui comprend un canal d'alimentation en eau de pulvérisation (5) débouchant dans au moins une ouverture de sortie d'eau de pulvérisation (4), le feu de freinage étant fixé au-dessus d'une vitre arrière (7) du véhicule automobile et de l'eau de pulvérisation pouvant être acheminée à la vitre arrière (7) du véhicule automobile par le biais du canal d'alimentation en eau de pulvérisation (5) du feu de freinage à travers la ou les ouvertures de sortie d'eau de pulvérisation, le canal d'alimentation en eau de pulvérisation (5) étant formé par des parties de boîtier du feu de freinage et une paroi du boîtier (1) tournée dans la direction d'émission de la lumière du feu de freinage étant formée par un verre de lampe (6),
**caractérisé en ce que**
l'ouverture de sortie d'eau de pulvérisation (4) est formée par une ouverture dans le verre de lampe (6) et
**en ce que** le canal d'alimentation en eau de pulvérisation (5) est réalisé dans la région inférieure du boîtier (1) adjacente à la vitre arrière (7) et **en ce que** le ou les moyens d'éclairage (2) est ou sont disposés au-dessus du canal d'alimentation en eau de pulvérisation (5) dans le boîtier (1).

2. Véhicule automobile selon la revendication 1,
**caractérisé en ce que**
l'ouverture dans le verre de lampe (6) est un trou, un trou oblong, ou une fente.

3. Véhicule automobile selon la revendication 1 ou 2,
**caractérisé en ce que**
plusieurs ouvertures de sortie d'eau de pulvérisation (4) sont formées par les parties du boîtier et sont en liaison avec le canal d'alimentation en eau de pulvérisation (5).

4. Véhicule automobile selon l'une quelconque des revendications précédentes,
**caractérisé en ce que**
le canal d'alimentation en eau de pulvérisation (5) présente une ouverture d'entrée d'eau de pulvérisation (9) avec un raccord à accouplement rapide (8).

5. Véhicule automobile selon l'une quelconque des revendications précédentes,
**caractérisé en ce que**
le boîtier (1) est constitué de pièces moulées par injection.
